# EUROPEAN PATENT APPLICATION

(11) **EP 4 589 288 A1**
(43) Date of publication of application: **23.07.2025**
(21) Application number: 24152188.9
(22) Date of filing: 16.01.2024
(51) Int. Cl.: G01N 23/20025

(54) **SAMPLE HOLDER, IN PARTICULAR FOR A SAMPLE ANALYZED BY X-RAY DIFFRACTION**

(71) Applicant: Chemovator GmbH, 68169 Mannheim (DE)
(72) Inventor: Hinrichsen, Bernd, 68169 Mannheim (DE)
(74) Representative: BASF IP Association

(57) **Abstract**

The invention relates to a sample holder (10), in particular for a sample (28) analyzed by X-ray diffraction, comprising a front part (12) and a back part (14), which are firmly attachable to one another by attachment means (20) and which each have a passage (22, 24), which are at least partially aligned to one another in the firmly attached state of the parts (12, 14), in which a sample cavity (26) is delimited by at least a part of the at least one passage (22, 24) and at least two foils (30, 32) closing the sample cavity (26) at its ends.

## Description

### TECHNICAL FIELD

The invention relates to a sample holder, in particular for a sample analyzed by X-ray diffraction, a sample holder array, an X-ray diffraction equipment and a use of a foil for producing such a sample holder.

### TECHNICAL BACKGROUND

X-ray diffraction is used to study the crystallographic structure of materials and occurs when X-rays interact with a crystalline material, leading to the scattering of X-rays in specific directions. This phenomenon provides valuable information about the atomic arrangement within the crystal.

EP 3845892 A1 discloses an X-ray scattering apparatus that comprises a sample holder for aligning and/or orienting a sample to be analyzed by X-ray scattering.

### SUMMARY

In an aspect, this disclosure relates to a sample holder, in particular for a sample analyzed by X-ray diffraction, comprising a front part and a back part, which are firmly attachable to one another by attachment means and which each have a passage, which are at least partially aligned to one another in the firmly attached state of the parts, in which a sample cavity is delimited by at least a part of the walls of the at least one passage and at least two foils closing the sample cavity at its ends.

In another aspect, the disclosure relates to a sample holder array comprising at least two receiving spaces each for one above-mentioned sample holder.

In another aspect, the disclosure relates to an X-ray diffraction equipment comprising an X-ray diffraction device and at least one above-mentioned sample holder or an above-mentioned sample holder array.

In another aspect, the disclosure relates to the use of a foil comprising a polymer layer and a metal layer for producing an above-mentioned sample holder.

Any disclosure, embodiments and examples described herein relate to the sample holder, the sample holder array, the X-ray diffraction equipment and the use of a foil lined out above and below. Advantageously, the benefits provided by any of the embodiments and examples equally apply to all other embodiments and examples.

In another aspect, the disclosure relates to a method for providing a sample to be provided to an X-ray diffraction measurement, the method comprising:
- triggering the providing of the sample to be measured by X-ray diffraction;
- providing the sample holder, e.g. as disclosed in any of the embodiments herein;
- placing the sample inside the sample holder, e.g. as disclosed in any of the embodiments described herein; and
- providing the sample placed inside the sample holder for X-ray diffraction measurement and/or for transport to an X-ray diffraction device.

### EMBODIMENTS

In the following, terminology as used herein and/or the technical field of the present disclosure will be outlined by ways of definitions and/or examples. Where examples are given, it is to be understood that the present disclosure is not limited to said examples.

In the field of X-ray scattering experiments there is a need for sample holders having a sample cavity that is easy to fill, is robust and gas-tight.

Since the sample holder according to the invention has a front part and a back part that, starting from an open state, in which the parts are moveable in relation to one another, can be brought into a closed state, in which the parts are held firmly attached to one another by attachment means, the sample cavity is easy to fill with a sample in form of a material to be examined in the open state of the sample holder and sealable liquid-tight and gas-tight in its closed state. In addition, since the sample cavity is delimited by at least a part of at least one passage through the respective part and the foils having suitable barrier properties the sample cavity is robust. Due to these sample holder properties a single sample arranged liquid-tight and gas-tight inside the sample cavity of the sample holder, can be transported securely, in particular send by physical mail.

These and other objects, which become apparent upon reading the following description, are solved by the subject matters of the independent claims. The dependent claims refer to embodiments of the invention.

In the firmly attached state of the parts a movement of one part in relation to the other part may be impossible. In the firmly attached state of the parts the passages may be aligned to one another such that radiation, in particular X-rays, can pass through the sample holder via the passages from one side of the sample holder to the other side of the sample holder. The sample cavity may be delimited by the walls of the passage of the back part and two foils closing the sample cavity at the ends of the passage.

In an embodiment, the parts each comprise a plate having the respective passage, and the respective foil which is attached to the plate, extending at least over an respective opening of the passage. The respective foil may be attached to the back side of each plate. In the state of the sample holder, in which the parts are moveable in relation to each other, one of the foils may only be attached to the back side of the front part plate whereas in the firmly attached state of the parts said foil may additionally be attached in a gas-tight and/or fluid-tight manner to the front of the back part plate. Another foil may be firmly attached to the back side of the back part plate in particular by welding and/or gluing in order to obtain a gas-tight and/or fluid-tight attachment. Thus, in the firmly attached state of the parts the sample cavity may be delimited gas-tight, in particular oxygen-tight, and/or fluid-tight, in particular water-tight.

In an embodiment, the respective foil comprises at least one of the following layers: a polymer layer, in particular a plastic layer, a metal layer, in particular an aluminum layer, and at least one adhesion layer. Preferably the respective metal layer is arranged between the respective plastic layer and the sample cavity. The respective metal layer prevents the diffusion of gas and/or fluid out of the sample cavity.

In an embodiment, the plastic layer has a thickness of 1 to 60 µm, in particular 10 to 50 µm, preferably 20 to 40 µm, especially preferred 30 µm, and/or the metal layer has a thickness of 1 to 80 nm, in particular 20 to 60 nm, preferably 30 to 50 nm, especially preferred 40 nm.

In an embodiment, the attachment means are formed by latching means and/or the adhesion layer. In the firmly connected state of the parts the latching means may pretension the front part plate in the direction of the back part plate against the back part plate such that between the metal layer of the foil of the front part plate and the back part plate by means of the adhesion layer a gas-tight and/or fluid-tight connection is established.

In an embodiment, the respective foil is transparent to radiation, in particular X-rays.

In an embodiment, the front part is articulated pivotably to the back part.

In an embodiment, the parts each have for the passage of a laser beam a further passage, which are at least partially aligned to one another in the attached state. In the firmly attached state of the parts the further passages may be aligned to one another such that radiation, in particular a laser beam, can pass from one side of the sample holder via the further passages to the other side of the sample holder. The laser beam in combination with the further passages serves for alignment purposes of the sample holder during a scattering process.

In an embodiment, for detachably securing the sample holder at a sample holder array engagement means are provided for at least partially engaging into corresponding receiving means of the sample holder array.

### BRIEF DESCRIPTION OF THE DRAWINGS

In the following, the present disclosure is further described with reference to the enclosed figures. The same reference numbers in the drawings and this disclosure are intended to refer to the same or like elements, components, and/or parts.
- FIG. 1: illustrates a perspective view of a sample holder according to the invention in an open state;
- Fig. 2: illustrates a perspective top view of the sample holder of Fig. 1 in a closed state;
- Fig. 3: illustrates a perspective bottom view of the sample holder of Fig. 1 in the closed state;
- Fig. 4: illustrates a cut off cross section through the sample holder shown in Fig. 2;
- Fig. 5: illustrates a perspective view of a sample holder array for sample holders according to Fig. 1;
- Fig. 6: illustrates a top view of the sample holder array of Fig. 5, in which sample holders according to Fig. 1 are provided;
- Fig. 7: illustrates an X-ray diffraction equipment comprising the sample holder array of Fig. 6; and

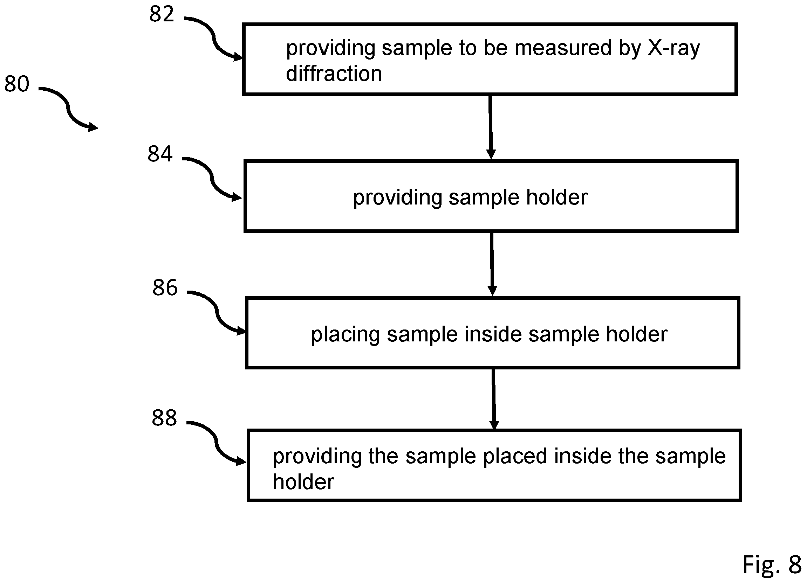

- Fig. 8: illustrates a method for providing a sample inside a sample holder according to Fig. 1.

### DETAILED DESCRIPTION

The following embodiments are mere examples for implementing the sample holder, the sample holder array and the X-ray diffraction equipment disclosed herein and shall not be considered limiting.

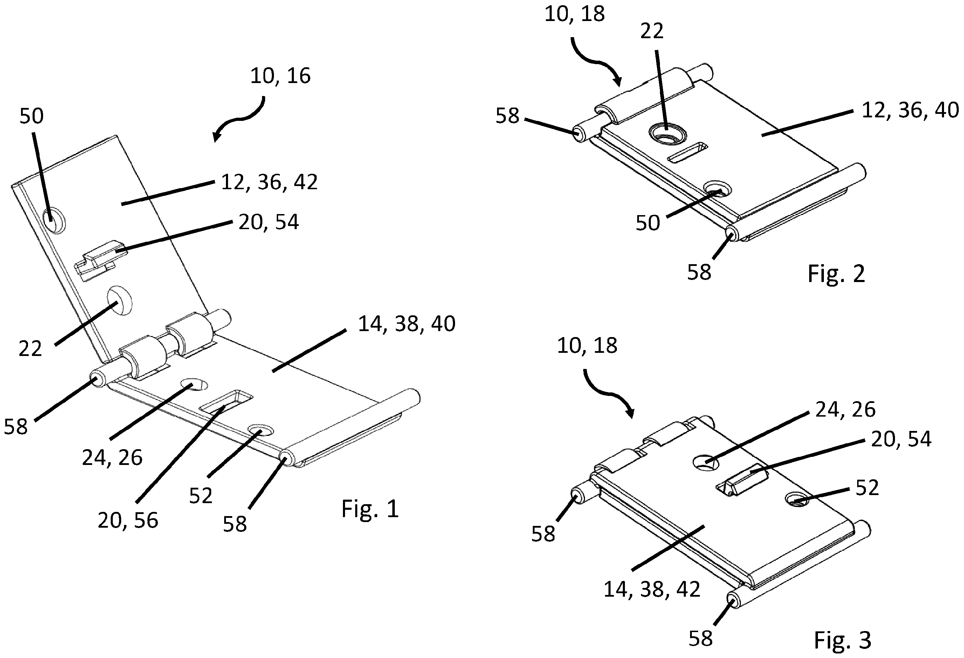

FIG. 1 to 4 illustrate a sample holder 10 according to the invention having a front part 12 and a back part 14. Starting from an open state 16 of the sample holder 10, in which the parts 12, 14 are moveable in relation to each other (Fig. 1), the sample holder 10 can be brought into a closed state 18, in which the parts 12, 14 are firmly attached to each other by attachment means 20 (Fig. 2, 3). In the firmly attached state of the parts 12, 14 a movement of one part 12, 14 in relation to the other part 14, 12 is impossible. The front part 12 and the back part 14 each have a passage 22, 24. In the firmly attached state of the parts 12, 14 the passages 22, 24 are aligned to each other such that radiation, in particular X-rays, can pass through the sample holder 10 via the passages 22, 24 from one side of the sample holder 10 to the opposite side of the sample holder 10. In the firmly attached state of the parts 12, 14 a sample cavity 26 for a sample 28 in form of a material to be examined, is delimited by one passage 24 and two foils 30, 32 closing the sample cavity 26 at its ends. The respective foil 30, 32 is transparent for radiation 34, in particular X-rays.

The front part 12 and the back part 14 each comprise a plate 36, 38 having a front side 40 and a back side 42. At the back side 42 of each plate 36, 38 the respective foil 30, 32 reaching at least over an entire opening 44 of the respective passage 22, 24, is attached. The respective foil 30, 32 has a metal layer 46, in particular an aluminum layer, and a polymer layer 48, in particular a plastic layer. The metal layer 46 is arranged between the polymer layer 48 and the sample cavity 26. The metal layer 46 prevents the diffusion of gas, in particular oxygen, and fluid, in particular water, out of the sample cavity 26. The polymer layer 48 may have a thickness of 30 µm and the metal layer 46 may have a thickness of 40 nm.

The foil 30 of the front part 12 is attached with its polymer layer 48 to the back side 42 of the front part plate 36. The other foil 32 is attached gas-tight and/or fluid-tight with its metal layer 46 to the back side 42 of the back part plate 38. To obtain the gas-tight and/or fluid-tight attachment the foil 32 of the back part 14 is welded or glued to the back part plate 38. In the firmly attached state of the parts 12, 14 the parts 12, 14 are connected gas-tight and/or fluid-tight in particular by an adhesion layer (not shown) provided between the front side 40 of the back part plate 38 and the metal layer 46 of the foil 30 attached to the front part plate 36. Thus, in the firmly attached state of the parts 12, 14 the sample cavity 26 is delimited by the two foils 30, 32 and the walls of the passage 24 of the back part 14. In the state of the parts 12, 14, in which they are moveable in relation to each other, the adhesion layer provided on the side of the front part metal layer 46 facing the back part 14, is protected by a protection cover (not shown) that is removed before the parts 12, 14 are firmly attached to one another.

The parts 12, 14 each have a further passage 50, 52. In the firmly connected state of the parts 12, 14 the further passages 50, 52 are aligned to each other such that radiation, in particular a laser beam, can pass through the sample holder 10 via the further passages 50, 52 from one side of the sample holder 10 to the opposite side of the sample holder 10. The further passages 50, 52 serve for positioning purposes of the sample holder 10 by means of the laser beam during X-ray diffraction experiments in an X-ray diffraction device.

The attachment means 20 are formed by a latching nose 54 that extends from the otherwise flat back side 42 of the front part plate 36, for latching engagement into a cut-out 56 of the back part plate 38.

In opposite end areas of the back part plate 38 on its front side 40 rod-formed engagement means 58 are provided aligned in parallel to one another and protruding on both sides over the back part plate 38. Apart from these engagement means 58 the front side 40 of the back part 14 is formed flat. The front part 12 is pivotable hinged to the back part 14 around a rotation axis preferably defined by one of the rod-formed engagement means 58. Thus, the front part 12 is pivotable around the rotation axis from the open state 16 of the sample holder 10 into its closed state 18. In the firmly attached state of the parts 12, 14 at least in the area around the passages 22, 24 the foil 30 on the front part plate 36 is pressed against the back part plate 38 pretensioned by the attachment means 20 (Fig. 3). Thus, sealing the connection of the parts 12, 14 gas-tight and/or fluid-tight. In the firmly attached state of the parts 12, 14 the front part plate 36 is arranged between the rod-formed engagement means 58.

For identification purposes the sample holder 10 is provided with a unique identifier which may be formed as a 2D-pattern (not shown).

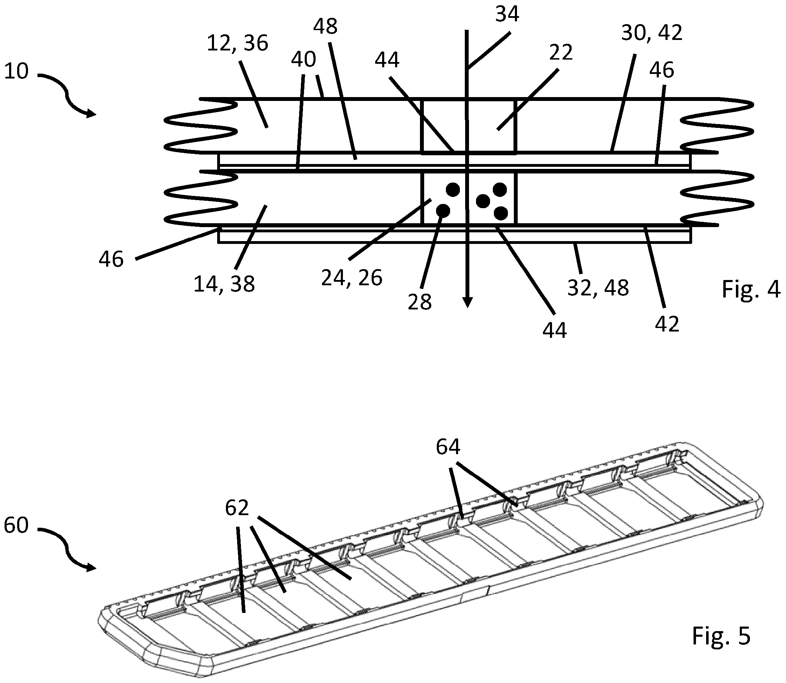

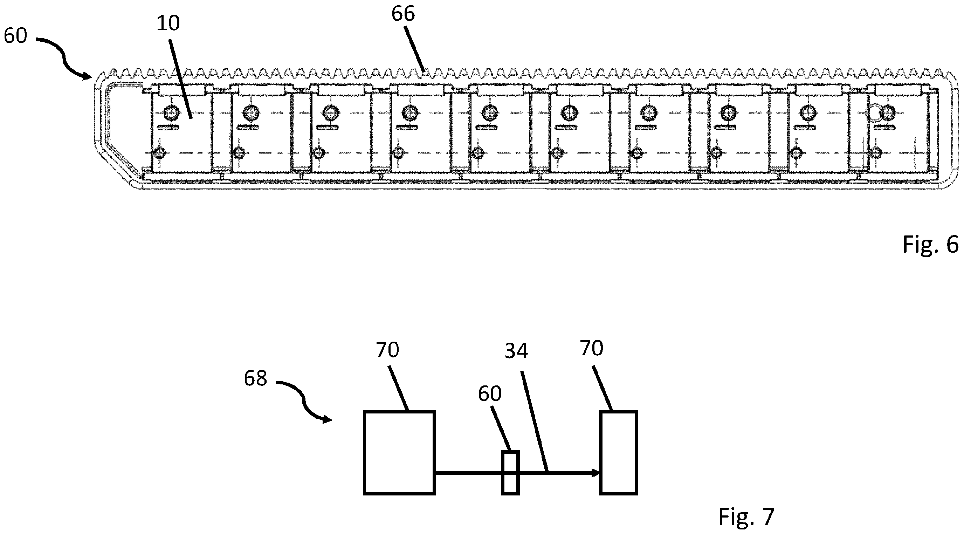

Fig. 5 and 6 illustrate a sample holder array 60 that has receiving spaces 62 for several sample holders 10. The respective sample holder 10 is detachably secured in its receiving space 62 in the sample holder array 60 in that the engagement means 58 of the sample holder 10 engage into corresponding receiving means 64 of the sample holder array 60. The receiving means 64 are formed as snap-in noses. Due to this design the sample holder array 60 is reusable. The sample holder array 60 has on one side a toothing 66 for engagement of a gear (not shown) for translatory movement of the sample holder array 60.

Fig. 7 illustrates an X-ray diffraction equipment 68 having an X-ray diffraction device 70 and a sample holder array 60.

In the following the use of the sample holder is explained:
Initially the sample holder 10 may be transported to a user.

For filling the sample cavity 26 with a sample 28 the front part 12 of the sample holder 10 is pivoted away from the back part 14. I. e. the sample holder 10 is open, so that the sample cavity 26 can be filled with the sample 28 in form of the material to be examined and the adhesive layer can be released from the protection cover. Then the front part 12 of the sample holder 10 is pivoted to the back part 12 such that the latching nose 54 gets into latching engagement with the cut-out 56 of the back part 14. Thereby pressing the front part 12 with its adhesive layer onto the front side 40 of the back part 14, which seals the sample cavity 26 gas-tight and/or fluid-tight.

In this state the sample holder 10 may be transported from the user to an X-ray diffraction device 70.

Thereafter the sample holder 10 is inserted into the sample holder array 60 by engaging with the engagement means 58 of the sample holder 10 the receiving means 64 of the sample holder array 60. For X-ray diffraction measurement the sample holder array 60 is used in the X-ray diffraction equipment 68, where via the toothing 66 the sample holder array 60 can be moved translatory and positioned due to the laser beam passing through the further passages 50, 52 of the respective sample holder 10. Arrived in the position required for X-ray diffraction measurement a measurement is performed.

Finally, the measurement results may be reported to the user.

## Claims

1. A sample holder (10), in particular for a sample (28) analyzed by X-ray diffraction, comprising a front part (12) and a back part (14), which are firmly attachable to one another by attachment means (20) and which each have a passage (22, 24), which are at least partially aligned to one another in the firmly attached state of the parts (12, 14), in which a sample cavity (26) is delimited by at least a part of the at least one passage (22, 24) and at least two foils (30, 32) closing the sample cavity (26) at its ends.

2. The sample holder (10) according to claim 1, wherein the parts (12, 14) each comprise a plate (36, 38) having the respective passage (22, 24), and the respective foil (30, 32) which is attached to the plate (36, 38), extending at least over an opening (44) of the respective passage (22, 24).

3. The sample holder (10) according to claims 1 or 2, wherein in the firmly attached state of the parts (12, 14) the sample cavity (26) is delimited gas-tight and/or fluid-tight.

4. The sample holder (10) according to any one of the preceding claims, wherein the respective foil (30, 32) comprises at least one of the following layers: a polymer layer (48), a metal layer (46) and at least one adhesion layer.

5. The sample holder (10) according to claim 4, wherein the respective metal layer (46) is arranged between the respective polymer layer (48) and the sample cavity (26).

6. The sample holder (10) according to claims 4 or 5, wherein the polymer layer (48) has a thickness of 1 to 60 µm, in particular 10 to 50 µm, preferably 20 to 40 µm, and/or the metal layer (46) has a thickness of 1 to 80 nm, in particular 20 to 60 nm, preferably 30 to 50 nm.

7. The sample holder (10) according to any one of the preceding claims, wherein the attachment means (20) are formed by latching means (54, 56) and/or the adhesion layer.

8. The sample holder (10) according to any one of the preceding claims, wherein the respective foil (30, 32) is transparent to radiation, in particular X-rays.

9. The sample holder (10) according to any one of the preceding claims, wherein the front part (12) is articulated pivotably to the back part (14).

10. The sample holder (10) according to any one of the preceding claims, wherein the parts (12, 14) each have for the passage of a laser beam a further passage (50, 52), which are at least partially aligned to one another in the attached state of the parts (12, 14).

11. The sample holder (10) according to any one of the preceding claims, wherein for detachably securing the sample holder (10) in a sample holder array (60) engagement means (58) are provided for at least partially engaging into corresponding receiving means (64) of the sample holder array (60).

12. A sample holder array (60) comprising at least two receiving spaces (62) each for a sample holder (10) according to any one of the preceding claims.

13. An X-ray diffraction equipment (68) comprising an X-ray diffraction device (70) and at least one sample holder (10) according to any one of claims 1 to 11 or a sample holder array (60) according to claim 12.

14. Use of a foil (30, 32) comprising a polymer layer (48) and a metal layer (46) for producing a sample holder (10) according to any one of claims 1 to 11.

15. Method (80) for providing a sample (28) to be provided to an X-ray diffraction measurement, the method comprising:
- providing (82) the sample (28) to be measured by X-ray diffraction;
- providing (84) the sample holder (10) according to any one of the claims 1 to 11;
- placing (86) the sample (28) inside the sample holder (10); and
- providing (88) the sample (28) placed inside the sample holder (10) for X-ray diffraction measurement and/or for transport to an X-ray diffraction device.
